Europäisches Patentamt

(19) European Patent Office

Office européen des brevets

(11) Veröffentlichungsnummer: **0 006 489**
**B1**

(12) **EUROPÄISCHE PATENTSCHRIFT**

(45) Veröffentlichungstag der Patentschrift:
**01.07.81**

(51) Int. Cl.³: **B 29 F 3/01**

(21) Anmeldenummer: **79101752.8**

(22) Anmeldetag: **02.06.79**

(54) Extruder zur Plastifizierung von Kunststoffmassen.

(30) Priorität: **13.06.78 DE 2825825**

(73) Patentinhaber: **Staehle Maschinenbau GmbH, Dieselstrasse 25, D-7022 Leinfelden-Echterdingen (DE)**

(43) Veröffentlichungstag der Anmeldung:
**09.01.80 Patentblatt 80/1**

(72) Erfinder: **Effenberger, Alfred, Ebinger Weg 23, D-7000 Stuttgart 80 (DE)**
Erfinder: **Staehle, Hermann, Dipl.-Ing., Anna-Peters-Strasse 57, D-7000 Stuttgart 70 (DE)**

(45) Bekanntmachung des Hinweises auf die Patenterteilung:
**01.07.81 Patentblatt 81/26**

(74) Vertreter: **Müller, Gerd et al, Patentanwälte F.W. Hemmerich Gerd Müller, Dipl.-Ing. D. Grosse Felix Pollmeier Hammerstrasse 2, D-5900 Siegen 1 (DE)**

(84) Benannte Vertragsstaaten:
**CH DE FR GB IT**

(56) Entgegenhaltungen:
**DE-A-2 051 885**
**DE-B2-2 327 684**

## Extruder zur Plastifizierung von Kunststoffmassen

Die Erfindung betrifft einen Extruder zur Plastifizierung von Kunststoffmassen, insbesondere für Hohlkörper-Blasanlagen, bei dem die Förderschnecke in Axialrichtung auswechselbar in das Extrudergehäuse und das daran anschließende Zylinderrohr hineinragt sowie im Anschluß an die Einfüllöffnung des Extrudergehäuses koaxial von einer Einzugsbüchse umgeben ist.

Derartige Extruder sind bereits bekannt. Sie werden bei der Plastifizierung von mittel- und hochmolekularen, pulverförmigen Polyolefinen mit einer intensiv gekühlten Einzugsbüchse ausgestattet, die in ihrem Bohrumfang mit gleichmäßig verteilt angeordneten Längsnuten versehen ist, die sich in Längsrichtung der Bohrung keilförmig verjüngen. Die Längsnuten können dabei verschiedene Querschnittsformen haben und mit ihrer größten Tiefe im Bereich der Einfüllöffnung beginnend, keilförmig zum unteren Ende der Einzugsbüchse hin verlaufen. Bewährt hat es sich dabei, wenn die Länge der Nuten etwa gleich dem Dreifachen des Durchmessers der Förderschnecke bemessen wird.

Zwischen der Einzugsbüchse und dem Extruderzylinder befindet sich ein Kühlwassermantel und in Transportrichtung der Förderschnecke ist zwischen der Einzugsbüchse und dem anschließenden, beheizten Extruderzylinder eine Wärmesperre angeordnet.

Beim Betrieb des Extruders wird das durch die Einfüllöffnung in die Einzugsbüchse eintretende Schüttgut mittels der keilförmigen Längsnuten verdichtet und es entsteht dabei bereits am Ende der Einzugsbüchse ein hoher Massedruck.

Die Nutung im Einzugsbereich des Extruders bewirkt einen speziellen Fördermechanismus, welcher zu hohen spezifischen Durchsatzraten für die eingebrachten Kunststoffe führt, so daß sich im Vergleich zu konventionellen Extrudern hohe Massedrücke und Energieumsätze im Einzugszonenbereich ergeben.

Da sich solche Extruder bei der Verarbeitung von hochmolekularen Polyolefinen bewährt haben, liegt es auf der Hand, die Nutzung ihrer Vorteile auch dort zu versuchen, wo in Hohlkörper-Blasanlagen andere Thermoplaste zum Einsatz gelangen. Auch in diesen Fällen ist das konstante Fördern und der hohe Fördergrad der Extruder von besonderer Bedeutung. Unabhängig von der Konsistenz des Rohstoffes, von wechselnden Gegendrücken, Temperaturschwankungen und sonstigen Einflüssen sind solche Feststoffpumpen in der Lage, eine exakte Rohstoffmenge in der Zeiteinheit aus der Düse einer Hohlkörper-Blasanlage zu pressen und damit eine konstante Länge des plastischen Vorformlings zu gewährleisten. Nur dann ist eine weitgehend störungsfreie Durchführung des Blasvorgangs zu erreichen.

Beim Betrieb der Extruder ist eine optimale Plastifizierung der verschiedenartigen Thermoplasttypen im wesentlichen von der geometrischen Form der Förderschnecke und der mit dieser zusammenarbeitenden Einzugsbüchse abhängig. Das heißt, beim Wechsel der Thermoplasttype ist regelmäßig auch ein Wechsel der Förderschnecke und der dieser zugeordneten Einzugsbüchse notwendig.

Während bei den Extrudern der gattungsmäßigen Art die Förderschnecken leicht austauschbar sind und ein Wechsel beim Übergang auf eine andere Thermoplasttype leicht und schnell vollzogen werden kann, ist jedoch ein Austausch der Einzugsbüchsen nicht oder aber nur unter hohem Zeit- und Arbeitsaufwand möglich.

Nur nach vollständiger und langwieriger Demontage des vorderen Zylinderrohres und der Heizarmaturen läßt sich die Einzugsbüchse wechseln. Beim Einbau der neuen Einzugsbüchse muß dann auch auf eine einwandfreie Abdichtung derselben für den Kühlwasserkreislauf genau geachtet werden.

Zweck der Erfindung ist es, diese den bekannten Extrudern der gattungsmäßigen Art anhaftenden Nachteile zu beseitigen. Daher liegt die Aufgabe vor, für den Extruder eine Ausgestaltung zu finden, bei der sich nach dem Entfernen der Förderschnecke auch die Einzugsbüchse leicht und einfach austauschen läßt.

Die Lösung dieser Aufgabe ist deshalb besonders wichtig, weil nicht nur Querschnittsform, Breite und Tiefe der Keilnuten, sondern auch deren Anzahl in die Bohrung der Einzugsbüchse an die unterschiedlichen Thermoplasttypen angepaßt werden muß. Bei der Bearbeitung bestimmter Thermoplaste ist es sogar auch notwendig, Einzugsbüchsen mit glattwandigen Bohrungen, also solche ohne Längsnuten, einzusetzen.

Die Lösung der Aufgabe wird nach der Erfindung im wesentlichen dadurch erreicht, daß die Einzugsbüchse in eine relativ zur Längsachse der Förderschnecke radial offene Ausnehmung des Extrudergehäuses austauschbar eingesetzt und darin drehfest gehalten sowie koaxial zur Längsachse der Förderschnecke ausgerichtet ist.

Die durch Anwendung dieser Maßnahme erreichte, problemlose Austauschbarkeit der Einzugsbüchse ist auch dann von besonderem Vorteil, wenn sich an diesen übermäßig große Verschleißerscheinungen einstellen. Das ist besonders bei der Verwendung von organischen auf Metalloxydbasis aufgebauten Pigmentbeimischungen zum Werkstoff der Fall, weil diese eine hohe abrasive Wirkung haben, die sich hauptsächlich im Bereich der Einzugsbüchsen nachteilig auswirkt. Durch die abrasive Wirkung werden nämlich Bohrungen der Einzugsbüchsen vergrößert und die darin befindlichen Keilnuten beschädigt oder sogar zerstört mit der Folge, daß einerseits Durchsatzminderungen bei gleichzeitiger Massetemperaturerhöhung eintreten, die einen wirtschaftlichen Betrieb des Extruders verhindert, und daß andererseits der charakteristische Fördermechanismus der Einzugsbüchsen verlorengeht.

Durch die erfindungsgemäß ermöglichte, leichte Austauschbarkeit der Einzugsbüchsen können diese ungünstigen Auswirkungen leicht und schnell beseitigt werden.

Nach einem weiterbildenden Erfindungsmerkmal weist die Einzugsbüchse mindestens eine, vorzugsweise aber zwei, in ihrer Längsrichtung verlaufende ebene Paßflächen auf, mit denen sie zwischen entsprechend angeordnete Paßflächen in der Ausnehmung des Extrudergehäuses drehfest eingreift. Hierdurch werden die von der Förderschnecke erzeugten und auf die Einzugsbüchse einwirkenden Verdrehkräfte sicher vom Extrudergehäuse aufgenommen.

Als besonders vorteilhaft hat es sich erwiesen, wenn die Einzugsbüchse eine polygonförmige, insbesondere quadratische oder rechteckige, Querschnittsform aufweist, welcher sich die Ausnehmung im Extrudergehäuse verhältnismäßig leicht anpassen läßt.

Da eine zuverlässige Fluchtung der Achsen von Einzugsbüchse, Zylinderrohr und Förderschnecke eine notwendige Voraussetzung zur Verminderung des mechanischen Verschleißes ist, wird erfindungsgemäß die Einzugsbüchse an beiden Enden mit einem konzentrisch zu ihrer Längsbohrung liegenden, abgesetzten Bund versehen, während einerseits das Zylinderrohr sowie andererseits das Extrudergehäuse mit Aufnahmeflächen versehen ist, in die diese Bunde der Einzugsbüchse passend einrückbar sind.

Besonders zweckmäßig ist es in diesem Zusammenhang, wenn nach der Erfindung die Einzugsbüchse in ihrem unteren Bund axial in die Aufnahmeflächen des Zylinderrohres einrückbar ist, während ihr oberer Bund an einer halbschalenförmigen Aufnahmefläche des Extrudergehäuses anliegt, an welcher der Bund durch einen ebenfalls halbschalenförmigen, mittels Schrauben verspannbaren Flansch festlegbar ist.

Schließlich ist es erfindungsgemäß aber auch noch wichtig, daß die Einzugsbüchse mit Kühlkanälen versehen wird, welche über Querkanäle mit Kühlmittelanschlüssen in Strömungsverbindung stehen. Die Kühlmittelanschlüsse können dabei ohne weiteres durch die radial offene Ausnehmung des Extrudergehäuses mit der Einzugsbüchse in Verbindung gebracht werden.

In der Zeichnung ist der Gegenstand der Erfindung an einem Ausführungsbeispiel dargestellt. Es zeigt

Fig. 1 eine erfindungsgemäße Einzugsbüchse im Längsschnitt,

Fig. 2 den erfindungswesentlichen Bereich eines Extruders im Längsschnitt mit eingebauter Einzugsbüchse und

Fig. 3 einen Schnitt längs der Linie III-III in Fig. 2 durch das Extrudergehäuse und die Einzugsbüchse.

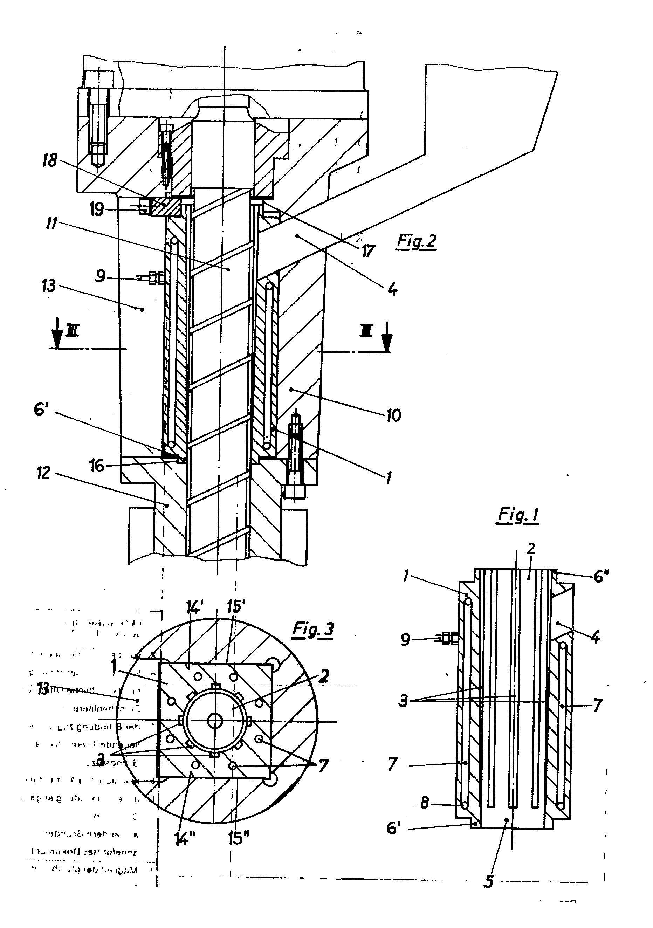

In Fig. 1 der Zeichnung ist die Einzugsbüchse 1 für einen Extruder dargestellt, welche eine Längsbohrung 2 aufweist. In die Mantelflächen dieser Längsbohrung 2 sind dabei Längsnuten 3 eingearbeitet, die über den Umfang gleichmäßig verteilt angeordnet sind. Die Längsnuten 3 weisen dabei am oberen Ende der Einzugsbüchse 1, d. h. im Bereich der Einfüllöffnung 4 für den Rohstoff ihre größte Profiltiefe auf, während sich diese Profiltiefe der Nuten 3 in Richtung nach dem unteren Ende 5 der Einzugsbüchse 1 hin keilförmig verringert.

Die Einzugsbüchse 1 hat an ihrem unteren Ende 5 einen konzentrisch zur Längsbohrung 2 liegenden, abgesetzten Bund 6' und ist an ihrem oberen Ende mit einem entsprechenden, abgesetzten Bund 6'' versehen.

In gleichmäßiger Verteilung um die Längsbohrung 2 sind in die Einzugsbüchse 1 noch eine Vielzahl von Kühlkanälen 7 eingeformt, die wiederum durch Querkanäle 8 miteinander sowie mit Kühlmittelanschlüssen 9 in Strömungsverbindung stehen.

Wie aus den Fig. 2 und 3 hervorgeht, wird diese Einzugsbüchse 1 so in das Extrudergehäuse 10 eingesetzt, daß die Achse ihrer Längsbohrung 2 exakt fluchtend mit der Längsachse der Förderschnecke 11 angeordnet ist.

Die Förderschnecke 11 ist in üblicher Weise in Axialrichtung auswechselbar in das Extrudergehäuse 10 eingeführt und ragt durch die Einzugsbüchse 1 bis in das sich nach unten an das Extrudergehäuse 10 anschließende Zylinderrohr 12 hinein.

Bei aus dem Zylinderrohr 12 und dem Extrudergehäuse 10 axial herausgezogener Förderschnecke 11 läßt sich die Einzugsbüchse 1 durch eine relativ zur Längsachse der Förderschnecke radial offene Ausnehmung 13 in das Extrudergehäuse einsetzen. Um eine verdrehungssichere Festlegung der Einzugsbüchse 1 im Extrudergehäuse 10 zu gewährleisten, hat einerseits die Einzugsbüchse seitliche Paßflächen 14' und 14'', die gemäß Fig. 3 durch eine polygonartige, insbesondere quadratische Querschnittsform der Einzugsbüchse 1 gebildet werden. Andererseits weist die Ausnehmung 13 des Extrudergehäuses 10 entsprechende Paßflächen 15' und 15'' auf, zwischen die die Einzugsbüchse 1 mit ihren Paßflächen 14' und 14'' eingreift, wenn sie seitwärts in die Ausnehmung 13 eingeschoben wird.

Die axiale Fluchtung zwischen der Achse der Längsbohrung 2 der Einzugsbüchse 1 mit der Längsachse der Förderschnecke 11 wird dadurch sichergestellt, daß ihr unterer, abgesetzter Bund 6' in zu ihm passende Aufnahmeflächen 16 am oberen Ende des Zylinderrohres 12 axial eingerückt wird. Gleichzeitig legt sich der obere, abgesetzte Bund 6'' derselben in eine halbschalenförmige Aufnahmefläche 17 des Extrudergehäuses 10 ein und er wird darin durch einen ebenfalls halbschalenförmigen Flansch 18 festgelegt, der durch die Ausnehmung 13 eingesetzt werden kann und sich mittels Schrauben 19 verspannen läßt.

Damit die Einzugsbüchse 1 zum Zwecke ihrer einwandfreien axialen Ausrichtung über ihre Bunde 6' und 6'' in die notwendige Eingriffslage gebracht werden kann, weist sie eine Längenabmessung auf, die geringfügig kleiner als die Längenabmessung der Ausnehmung 13 im Extrudergehäuse 10 ist. Die axial unverschiebbare Abstützung der Einzugsbüchse 1 wird dabei über den Befestigungsflansch 18 erreicht, wie das aus Fig. 2 ersichtlich ist.

Es ist ohne weiteres klar, daß es zum Wechseln der Einzugsbüchsen 1 lediglich notwendig ist, die Förderschnecke 11 axial nach oben herauszuziehen und den Sicherungsflansch 18 durch Lösen der Schrauben 19 zu entfernen. Durch leichtes Anheben der Einzugsbüchse 1 in Axialrichtung kann dann der untere Bund 6' aus den Aufnahmeflächen 16 des Zylinderrohres 12 herausgehoben sowie anschließend die Einzugsbüchse 1 quer durch die Ausnehmung 13 aus dem Extrudergehäuse 10 herausgezogen werden. Der Einbau einer neuen und/oder anderen Einzugsbüchse 1 erfolgt dann in umgekehrter Weise.

Aus der Fig. 2 ergibt sich deutlich, daß die Kühlmittelanschlüsse 9 der Einzugsbüchse 1 im Bereich der Ausnehmung 13 liegt und damit eine einwandfreie Kühlmittelzuführung während des Betriebs des Extruders ermöglichen.

Erkennbar ist aus Fig. 2 auch, daß sich zwischen der Einzugsbüchse 1 und dem Zylinderrohr 12 auf einfache Weise eine Wärmesperre bilden läßt. Die Einzugsbüchse 1 liegt nämlich lediglich mit dem abgesetzten Bund 6' an den Aufnahmeflächen 16 des Zylinderrohres 12 an, so daß nur kleine Berührungsflächen entstehen, durch die nur geringe Wärmemengen übertragen werden.

Die Erfindung beschränkt sich nicht auf das in der Zeichnung dargestellte Ausführungsbeispiel einer Einzugsbüchse. Vielmehr können die Einzugsbüchsen 1 auch eine andere als die in Fig. 3 gezeigte, quadratische Querschnittsform haben. Die Querschnittsform der Keilnuten 2 braucht auch nicht rechteckig zu sein. Je nach Bedarf kann er vielmehr keilförmig halbrund oder auch oval vorgesehen werden. Schließlich lassen sich auch Breite und Tiefe sowie die Anzahl der in die Bohrungswandung eingearbeiteten Keilnuten bedarfsentsprechend variieren.

Wichtig ist aber, daß die Einzugsbüchse 1 in jedem Falle in eine relativ zur Längsachse der Förderschnecke radial offene Ausnehmung des Extrudergehäuses eingesetzt und darin drehfest gehalten sowie koaxial zur Längsachse der Förderschnecke ausgerichtet werden kann, damit bedarfsweise ein einfacher Austausch möglich ist.

## Patentansprüche

1. Extruder zur Plastifizierung von Kunststoffmassen, insbesondere für Hohlkörper-Blasanlagen, bei dem die Förderschnecke in Axialrichtung auswechselbar in das Extrudergehäuse und das daran anschließende Zylinderrohr hineinragt sowie im Anschluß an die Einfüllöffnung des Extrudergehäuses koaxial von einer Einzugsbüchse umgeben ist, dadurch gekennzeichnet, daß die Einzugsbüchse (1) in eine relativ zur Längsachse der Förderschnecke (11) radial offene Ausnehmung (13) des Extrudergehäuses (10) austauschbar eingesetzt und darin drehfest gehalten (14', 14''; 15', 15'') sowie koaxial zur Längsachse der Förderschnecke (11) ausgerichtet ist (6', 16; 6'', 17, 18, 19).

2. Extruder nach Anspruch 1, dadurch gekennzeichnet, daß die Einzugsbüchse (1) mindestens eine, vorzugsweise aber zwei, in ihrer Längsrichtung verlaufende ebene Paßflächen (14', 14'') hat, mit denen sie zwischen entsprechend angeordneten Paßflächen (15', 15'') in der Ausnehmung (13) des Extrudergehäuses (10) drehfest eingreift (Fig. 3).

3. Extruder nach den Ansprüchen 1 und 2, dadurch gekennzeichnet, daß die Einzugsbüchse (1) eine polygonförmige, insbesondere quadratische oder rechteckige, Querschnittsform aufweist (Fig. 3).

4. Extruder nach den Ansprüchen 1 bis 3, dadurch gekennzeichnet, daß die Einzugsbüchse (1) an beiden Enden mit einem konzentrisch zu ihrer Längsbohrung (2) liegenden, abgesetzten Bund (6', 6'') versehen ist und daß einerseits das Zylinderrohr (12) sowie andererseits das Extrudergehäuse (10) mit Aufnahmeflächen (16 bzw. 17) versehen ist, in die die Bunde (6', 6'') der Einzugsbüchse (1) passend einrückbar sind (Fig. 2).

5. Extruder nach den Ansprüchen 1 bis 4, dadurch gekennzeichnet, daß die Einzugsbüchse (1) mit ihrem unteren Bund (6') axial in die Aufnahmefläche (16) des Zylinderrohres (12) einrückbar ist, während ihr oberer Bund (6'') an einer halbschalenförmigen Aufnahmefläche (17) des Extrudergehäuses (10) anliegt, an welcher der Bund durch einen ebenfalls halbschalenförmigen, mittels Schrauben (19) verspannbaren Flansch (18) festlegbar ist (Fig. 2).

6. Extruder nach den Ansprüchen 1 bis 5, dadurch gekennzeichnet, daß die Einzugsbüchse (1) mit Kühlkanälen (7) versehen ist, die über Querkanäle (8) miteinander und mit Kühlmittelanschlüssen (9) in Strömungsverbindung stehen.

## Claims

1. Extruder for plasticisng synthetic plastics compositions, more especially for blowing installations for hollow bodies, in which the screw conveyor projects so as to be capable of being interchanged axially into the extruder housing and the following cylindrical tube and also, following the feed opening or sprue of the extruder housing, is coaxially surrounded by a feeding bush, characterized in that the feeding bush (1) is interchangeably fitted into a recess (13) of the extruder housing (10), which recess is open radially relatively to the longitudinal axis of the screw conveyor (11), and is non-rotatably held therein at (14', 14''; 15', 15'') and is also aligned at (6', 16; 6'', 17, 18, 19) coaxially of the longitudinal axis of the screw conveyor (11).

2. Extruder according to Claim 1, characterized in that the feeding bush (1) has at least one, but preferably two, planar registering surfaces (14', 14'') which extend longitudinally, with which the said bush engages so as to be non-rotatable between correspondingly arranged registering surfaces (15', 15'') in the recess (13) of the extruder housing (10) (Figure 3).

3. Extruder according to Claims 1 and 2, characterized in that the feeding bush (1) has a polygonal cross-sectional form, which is more especially square or rectangular (Figure 3).

4. Extruder according to Claims 1 to 3, characterized in that the feeding bush (1) is provided at both ends with a set-back collar (6', 6'') and that, at one end, the cylindrical tube (12) and, at the other end, the extruder housing (10), are provided with receiving surfaces (16 and 17, respectively), into which the collars (6', 6'') of the feeding bush (1) can be inserted with a good fit (Figure 2).

5. Extruder according to Claims 1 to 4, characterized in that the feeding bush (1) is capable of being fitted with its bottom collar (6') axially into the receiving surface (16) of the cylindrical tube (12), while its top collar (6'') bears against a half shell-shaped receiving surface (17) of the extruder housing (10), on which the collar is able to be fixed by a likewise half shell-shaped flange (18) which can be tightened by screws (19).

6. Extruder according to Claims 1 to 5, characterized in that the feeding bush (1) is provided with cooling ducts (7) which have a flow connection by way of transverse passages (8) with one another and with coolant connections (9).

**Revendications**

1. Extrudeuse à vis de transport pour la plastification de masses de matière synthétique, notamment dans des installations de soufflage de corps creux, dans laquelle la vis est engagée de façon amovible en direction axiale dans le corps de l'extrudeuse et dans le tube cylindrique raccordé à ce corps, cette vis étant, à la suite de l'orifice d'alimentation ménagé dans le corps de l'extrudeuse, entourée coaxialement par une douille d'entrée, cette extrudeuse étant remarquable en ce que la douille d'entrée (1) est engagée de manière amovible dans un évidement (13) du corps (10) de l'extrudeuse, cet évidement étant, par rapport à l'axe longitudinal de la vis transporteuse (11), ouvert dans le sens radial, la dite douille (1) étant fixée dans le dit évidement sans possibilité de rotation (14', 14''; 15', 15'') et étant centrée (6', 16; 6'', 17, 18, 19) coaxialement à l'axe longitudinal de la vis de transport (11).

2. Extrudeuse selon la revendication 1, remarquable en ce que la douille d'entrée (1) comporte au moins une mais de préférence deux faces planes d'ajustage (14', 14'') orientées dans la direction longitudinale de cette douille et au moyen desquelles elle est engagée sans possibilité de rotation entre des faces d'ajustage correspondantes (15', 15'') prévues dans l'évidement (13) du corps (10) de l'extrudeuse (Fig. 3).

3. Extrudeuse selon la revendication 1 ou 2, remarquable en ce que la douille d'entrée (1) a une section de forme polygonale, notamment carrée ou rectangulaire (Fig. 3).

4. Extrudeuse selon les revendications 1 à 3, remarquable en ce que la douille d'entrée comporte à chacune de ses extrémités un épaulement en retrait (6', 6'') concentrique à son alésage longitudinal (2), et en ce que d'une part le tube cylindrique (12), d'autre part le corps (10) de l'extrudeuse, sont munis de surfaces de réception (16 et 17 respectivement) dans lesquelles peuvent être engagés sans jeu les épaulements (6', 6'') de la douille d'entrée (1) (Fig. 2).

5. Extrudeuse selon les revendications 1 à 4, remarquable en ce que la douille d'entrée (1) peut être engagée axialement, par son épaulement inférieur (6''), dans la surface de réception (16) du tube cylindrique (12), tandis que son épaulement supérieur (6'') est en contact avec une surface de réception en forme de demi coquille (17) du corps (10) de l'extrudeuse, cet épaulement pouvant être fixé à cette surface de réception en demi coquille par une bride (18) également en forme de demi coquille et serrable au moyen de vis (19) (Fig. 2).

6. Extrudeuse selon les revendications 1 à 5, remarquable en ce que la douille d'entrée (1) comporte des canaux de refroidissement (7) qui communiquent entre eux et avec des raccordements (9) de fluide refroidisseur par des canaux transversaux (8).

Fig.2

Fig.1

Fig.3